# EUROPEAN PATENT SPECIFICATION

(11) **EP 1 211 267 B1**
(45) Date of publication and mention of the grant of the patent: **03.05.2006**
(21) Application number: 01125506.4
(22) Date of filing: 25.10.2001
(51) Int. Cl.: C08F 220/28, C09D 133/14, C08F 220/12, C08F 212/06

(54) **Coating compositions based on hydroxy-functional (meth)acrylic copolymers**
Beschichtungsmittelzusammensetzungen auf Basis Hydroxy-funktioneller (Meth)Acrylcopolymerisate
Compositions de revêtement à base de copolymères (meth)acrylique à fonction hydroxide

(30) Priority: 04.12.2000 US 729000
(43) Date of publication of application: 05.06.2002
(73) Proprietor: E.I. DU PONT DE NEMOURS AND COMPANY, Wilmington, Delaware 19898 (US)
(72) Inventor: Delmotte, Ann, 1702 Groot-Bijgaarden (BE); Hybrechts, Josef, 2360 Oud-Turnhout (BE); Vaes, Ann, 2500 Koningshooikt (BE); Paulussen, Harald, 3461 Molenbeek-Wersbeek (BE)
(74) Representative: DuPont Performance Coatings Biering/Blum/Kimpel

(56) References cited:
- EP-A- 0 408 917
- EP-A- 0 567 214
- DE-A- 19 855 125
- GB-A- 2 247 632
- GB-A- 2 322 863
- US-A- 5 726 250

## Description

### BACKGROUND OF THE INVENTION

### Field of the Invention

The invention relates to coating compositions based on cross-linkable hydroxy-functional (meth)acrylic copolymers, which can be used in automotive and in industrial coatings as a clear coat or as a pigmented top coat.

### Description of Related Art

Coating compositions based on hydroxy-functional (meth)acrylic copolymers, that are cross-linked with polyisocyanates, are known in the art. These so-called "two-component coatings" are extensively used as automotive coatings because of the good technological properties such as hardness and scratch resistance that are obtained with these coatings. Apart from the known general advantages, there are certain compositional parameters that require improvement. There is a need for a coating composition where a balance exists among properties like acceptable drying and curing time, good hardness and scratch resistance.

EP-A-439 021 describes hydroxy-functional (meth)acrylic copolymers that contain 20-30 wt-% glycidyl esters of alpha-alkylalkane monocarboxylic acids or alpha, alpha-dialkylalkane monocarboxylic acids, 8-12 wt-% methacrylic acid, 15-27 wt-% hydroxyalkyl methacrylates, 30-53 wt-% styrene and 1-5 wt-% polypropyleneglycol monomethacrylate. These copolymers are suitable for use in two-component coating compositions that are cross-linked with polyisocyanates. However, coatings prepared with these coating compositions do not attain the level of scratch resistance required for an automotive coating and do not have satisfactory drying characteristics.

EP-A-822 966 describes coating compositions that are cross-linkable using melamine resins and blocked polyisocyanates. These compositions contain 20-80 wt-% of a fluorine-containing copolymer and 20-80 wt-% of a vinyl copolymer free of fluorine as the hydroxy component. The vinyl copolymer free of fluorine comprises at least 10 wt-% unsaturated monomers based on reaction products of hydroxypropyl (meth)acrylates with glycols and/or based on reaction products of hydroxypropyl (meth)acrylates with lactones. Fluorine-containing coating compositions generally have the disadvantage of providing a poor intermediate layer adhesion. Furthermore, these coating compositions require overlong drying periods at low drying temperatures, for example, 60°C and below. Often the layer of coating over which the fluorine containing coating has been applied is partially dissolved which impairs some of the properties of that layer.

There is a need for a coating composition based on hydroxy-functional (meth)acrylic copolymers that has good adhesion to substrates such as an intermediate layer of a coating or a paint, does not dissolve or partially dissolve such an intermediate layer, has a balance of good drying and curing properties at relatively low temperatures (60°C and below) and in short times, and the resulting coating has good hardness and good scratch resistance. The novel coating composition of this invention has these aformentioned characteristics.
The invention is directed to solvent-based coating compositions comprising
(I) 20 to 80 wt-% of at least one hydroxy-functional (meth)acrylic copolymer I having an OH-value from 40 to 260 mg KOH/g, and a number average molecular mass Mn from 1,300 to 20,000 g/mol,,
(II) 5 to 40 wt-% of at least one cross-linking agent II which is reactive with hydroxyl groups,
(III) 10 to 50 wt-% of organic solvents,
whereby the wt-% are based on the weight of the coating composition and wherein the at least one hydroxy-functional (meth)acrylic copolymer I consists of the following polymerized components:
A. 20 to 40 wt-% of at least one polyalkyleneglycol (meth)acrylate,
B. 10 to 50 wt-% of at least one vinylaromatic olefinically unsaturated monomer capable of radical polymerization,
C. 15 to 40 wt-%, of at least one hydroxyalkyl ester of (meth)acrylic acid, at least one reaction product of alpha, beta-unsaturated monocarboxylic acids with glycidyl esters of saturated monocarboxylic acids branched in the alpha position and/or at least one reaction product of hydroxyalkyl (meth)acrylates with lactones,
D. 5 to 50 wt-% of at least one (meth)acrylic acid ester of an aliphatic and/or cycloaliphatic alcohol having 1 to 10 carbon-atoms in the (cyclo)alkyl residue,
whereby the sum of the proportions of components A to D totals 100 wt-%.

### DETAILED DESCRPITION OF THE INVENTION

The term (meth)acrylic as used here and hereinafter should be taken to mean methacrylic and/or acrylic.

Surprisingly, it has been found that the coating compositions of this invention has a balance of good drying and curing properties at relatively low temperatures and in short times and the resulting coating has good adhesion to the substrate to which it has been applied and good hardness and scratch resistance.
The preferred coating composition contains:
(I) 30 to 60 wt-%, of at least one hydroxy-functional (meth)acrylic copolymer I,
(II) 10 to 30 wt-%, of at least one cross-linking agent II which is reactive with hydroxyl groups,
(III) 15 to 40 wt-%, of organic solvents and optionally, contains pigments, fillers and/or additives conventionally used in coating compositions. The above wt% is based on the weight of the coating composition.

Preferred coating compositions contain hydroxy-functional (meth)acrylic copolymers having an OH-value from 80 to 200 mg KOH/g and a number average molecular mass (Mn) from 1,500 to 15,000 g/mol, in particular preferably from 2,000 to 12,000 g/mol (determined by get permeation chromatography using a polystyrene standard).

The hydroxy-functional (meth)acrylic copolymers I contained in the coating compositions of this invention can be formed in any conventional manner by radical polymerization of the Components A to D.

Component A is the reaction product of (meth)acrylic acid with a polyalkylene glycol. In particular, Component A has the general formula: 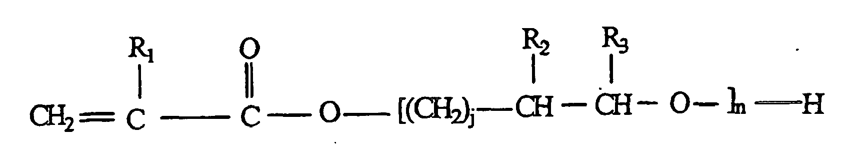 wherein R₁ = H or methyl; R₂ = H or methyl; R₃ = H or methyl; j = 0 - 3; n=1 - 10.

Preferred polyalkyleneglycol (meth)acrylates have 2 to 4 carbon atoms in the alkyl residue, n is preferably 3 to 6, in particular preferably 5 to 6. The polyalkylene (meth)acrylates have, for example, OH-values from 120 to 160 mg KOH/g. Preferably, polyethyleneglycol (meth)acrylates and polypropyleneglycol (meth)acrylates are used. Polypropyleneglycol (5) methacrylate having an average molecular mass of 360 to 390 g/mol is particularly preferably used. Components suitable as the Component A are available as commercial products, for example under the names Bisomer ® PPM5S, PPM6E, PEM6E, PPA6 (Laporte Chemicals).

Component B, the vinylaromatic olefinically unsaturated monomer capable of radical polymerization, is a vinylaromatic carbohydrate having preferably 8 to 12 carbon atoms in the molecule. Examples of such monomers are styrene, alpha-methylstyrene, chlorostyrenes, vinyltoluenes, 2,5-dimethylstyrene, p-methoxystyrene and tertiary butylstyrene. Styrene is preferred.

Component C preferably is one hydroxyalkyl ester of (meth)acrylic acid. The hydroxyalkyl constituent may contain, for example, 1 to 10 carbon atoms, preferably 2 to 6 carbon atoms. Examples of suitable hydroxyalkyl esters of alpha,beta-olefinically unsaturated monocarboxylic acids having primary hydroxyl groups are hydroxyethyl (meth)acrylate, hydroxypropyl (meth)acrylate, hydroxybutyl (meth)acrylate, hydroxyamyl (meth)acrylate, hydroxyhexyl (meth)acrylate. Examples of suitable hydroxyalkyl esters having secondary hydroxyl groups are 2-hydroxypropyl (meth)acrylate, 2-hydroxybutyl (meth)acrylate, and 3-hydroxybutyl (meth)acrylate.

Other hydroxy-functional unsaturated monomers which may be used are reaction products of alpha,beta-unsaturated monocarboxylic acids with glycidyl esters of saturated monocarboxylic acids branched in the alpha position, e.g., with glycidyl esters of saturated alpha-alkylalkane monocarboxylic acids or alpha,alpha'-dialkylalkane monocarboxylic acids. These are preferably the reaction products of (meth)acrylic acid with glycidyl esters of saturated alpha,alpha'-dialkylalkane monocarboxylic acids having 7 to 13 carbon atoms in the molecule, in particular, preferably having 9 to 11 carbon atoms in the molecule. The formation of these reaction products may take place before, during or after the copolymerization reaction.

Additional hydroxy-functional unsaturated monomers that may be used are reaction products of hydroxyalkyl (meth)acrylates with lactones. At least a part of the hydroxyalkyl ester of the alpha,beta-unsaturated monocarboxylic acids described above may be modified in this way. This takes place by means of an esterification reaction, which proceeds with the ring opening of the lactone. Again, hydroxyl groups in the form of hydroxyalkyl ester groups corresponding to the lactone in question are formed in the terminal position during the reaction. The above-mentioned hydroxyalkyl (meth)acrylates can be used to form the reaction product.

Examples of suitable lactones are those containing 3 to 15 carbon atoms in the ring and where the rings may also have various substituents. Preferred lactones are gamma butyrolactone, delta valerolactone, epsilon caprolactone, beta-hydroxy-beta-methyl-delta valerolactone, lambda laurinlactone or mixtures thereof. Epsilon caprolactone is particularly preferred. The reaction products are preferably those of 1 mole of a hydroxyalkyl ester of an alpha,beta-unsaturated monocarboxylic acid with 1 to 5 moles, preferably on average 2 moles, of a lactone. The modification of the hydroxyl groups of the hydroxyalkyl esters with the lactone may take place before, during or after the copolymerization reaction has been carried out.

Component D is a unsaturated monomer that contains no further reactive functional groups apart from at least one olefinic double bond. Examples of suitable unsaturated monomers without further functional groups are esters of unsaturated carboxylic acids having aliphatic, monohydric branched or unbranched and cyclic alcohols having 1 to 20 carbon atoms. Examples of suitable unsaturated carboxylic acids are acrylic acid, methacrylic acid, crotonic acid and isocrotonic acid. These are preferably esters of (meth)acrylic acid. Examples of (meth)acrylic acid esters of aliphatic alcohols are methyl acrylate, ethyl acrylate, isopropyl acrylate, tert.-butyl acrylate, n-butyl acrylate, isobutyl acrylate, 2-ethylhexyl acrylate, lauryl acrylate, stearyl acrylate and the corresponding methacrylates. Examples of (meth)acrylic acid esters of cyclic alcohols are cyclohexyl acrylate, trimethylcyclohexyl acrylate, 4-tert.-butylcyclohexyl acrylate, isobornyl acrylate and the corresponding methacrylates. Examples of (meth)acrylic acid esters with aromatic alcohols are benzyl (meth)acrylates.

Examples of further suitable unsaturated monomers without further functional groups are for example vinyl esters, such as, vinyl acetate, vinyl propionate and vinyl esters of unsaturated monocarboxylic acids which are branched in the alpha-position, for example vinyl esters of unsaturated alpha, alpha'-dialkylalkane monocarboxylic acids and vinyl esters of unsaturated alpha-alkylalkane monocarboxylic acids having each 5-13 carbon atoms, preferably 9 to 11 carbon atoms in the molecule.

It is also possible to use small proportions of olefinically polyunsaturated monomers. These are monomers having at least 2 double bonds capable of radical polymerization. Examples thereof are divinylbenzene, 1,4-butane diol diacrylate, 1,6-hexanediol diacrylate, neopentylglycol dimethacrylate, glycerol dimethacrylate.

(Meth)acrylic acid esters having 1 to 10 carbon-atoms in the (cyclo)alkyl residue are preferably used as Component D.

The preparation of the hydroxy-functional (meth)acrylic copolymers of this invention may be accomplished by radical copolymerization. This may be carried out by conventional processes well known to those skilled in the art, e.g., bulk, solution or pearl polymerization, particularly by radical solution polymerization using radical initiators. Examples of suitable radical initiators are dialkyl peroxides, diacyl peroxides, hydroperoxides such as cumene hydroperoxide, peresters, peroxydicarbonates, perketals, ketone peroxides, azo compounds such as 2,2'-azo-bis-(2,4-dimethylvaleronitrile, azo-bis-isobutyronitrile, C-C-cleaving initiators such as, benzpinacol derivatives. The initiators may be used in amounts from 0.1 to 4.0 wt-%, for example, based on the initial monomer weight .

The solution polymerization process is generally carried out by charging the solvent into a reaction vessel, heating the solvent to its reflux temperature and continuously metering a monomer/initiator mixture into the reaction vessel over a particular period. The polymerization is preferably carried out at temperatures between 60°C and 200°C, preferably at 130°C to 180°C.

Examples of suitable organic solvents that may be used in solution polymerization and also later in the coating compositions according to the invention include: glycol ethers such as ethylene glycol dimethylether; propylene glycol dimethylether; glycol ether esters such as ethyl glycol acetate, butyl glycol acetate, 3-methoxy-n-butyl acetate, butyl diglycol acetate, methoxy propyl acetate, esters such as butyl acetate, isobutyl acetate, amyl acetate; ketones, such as methyl ethyl ketone, methyl isobutyl ketone, cyclohexanone, isophorone, aromatic hydrocarbons (e.g. with a boiling range from 136°C to 180°C) and aliphatic hydrocarbons.

Chain transfer agents such as, e.g., mercaptans, thioglycolic acid esters, cumene or dimeric alpha methylstyrene may be used to control the molecular weight of the copolymer.

The coating composition of this invention additionally comprises at least one hydroxy-functional (meth)acrylic copolymer having an OH-value from 40 to 260 mg KOH/g and a number average molecular mass (Mn) from 1,300 to 20,000 g/mol, which contains one or more polymerized polyalkyleneglycol(meth)acrylates in such quantities that 20 to 40 wt-% polyalkyleneglycol (meth)acrylate, based on the total amount of (meth)acrylic copolymer, are contained in the coating composition.

The coating composition of this invention preferably contains, apart from the hydroxy-functional (meth)acrylic copolymers I, one or more cross-linking agents II, which are capable of reacting with the hydroxyl groups of the (meth)acrylic copolymer I.

Compounds having groups that are reactive with hydroxyl groups may be used as a suitable cross-linking agent component. For example, these may be polyisocyanates having free isocyanate groups, polyisocyanates having at least partially blocked isocyanate groups, aminoresins and/or tris-(alkoxycarbonylamino)triazines, such as, 2,4,6-tris-(methoxycarbonylamino)-1,3,5-triazine and 2,4,6-tris-(butoxycarbonylamino)-1,3,5,-triazine.

Examples of the polyisocyanates include any organic polyisocyanates having aliphatically, cycloaliphatically, araliphatically and/or aromatically bonded free isocyanate groups. The polyisocyanates are liquid at room temperature or can be liquefied by the addition of organic solvents. The polyisocyanates generally have a viscosity from 1 to 6000 mPas, preferably more than 5 and less than 3000 mPas at 23°C. Such polyisocyanates are known to the person skilled in the art and are commercially available.

Preferred polyisocyanates are polyisocyanates or polyisocyanate mixtures having exclusively aliphatically and/or cycloaliphatically bonded isocyanate groups having an average NCO functionality from 1.5 to 5, preferably 2 to 4.

Particularly suitable examples are the so-called "coating polyisocyanates" based on hexamethylene diisocyanate (HDI), 1-isocyanato-3,3,5-trimethyl-5-isocyanatomethyl-cyclohexane (IPDI) and/or bis(isocyanatocyclohexyl)-methane and the inherently known derivatives of said diisocyanates having biuret, allophanate, urethane and/or isocyanurate groups from which, after their preparation, excess starting diisocyanate is removed, preferably by distillation, to obtain a residual content of less than 0.5 wt-%. Triisocyanates, such as, nonane triisocyanate, also can be used.

Sterically hindered polyisocyanates also can be used. Examples thereof are 1,1,6,6-tetramethyl-hexamethylene diisocyanate, 1,5-dibutyl-penta-methyl diisocyanate, p- or m-tetramethylxylylene diisocyanate and the corresponding hydrogenated homologues.

In principle, diisocyanates may be reacted in the usual way know to those skilled in the art to higher functionality compounds, for example, by trimerization or by reaction with water or polyols, such as, trimethylolpropane or glycerin.

The polyisocyanate cross-linking agents may be used on their own or in mixture. They are the conventional polyisocyanate cross-linking agents used in the coating industry that are described comprehensively in the literature and are also available as commercial products.

The polyisocyanates may also be used in the form of isocyanate-modified resins.

Blocked or partially blocked polyisocyanates may also be used as the cross-linking component. Examples of blocked or partially blocked isocyanates are any di- and/or polyisocyanates in which the isocyanate groups or a part of the isocyanate groups have been reacted with compounds containing active hydrogen. Di- and/or polyisocyanates used may also be corresponding prepolymers containing isocyanate groups. These are, for example, aliphatic, cycloaliphatic, aromatic, optionally also sterically hindered polyisocyanates, as already described above. Trivalent aromatic and/or aliphatic blocked or partially blocked isocyanates having a number average molecular mass from, e.g., 500 to 1,500 are preferred. Typical isocyanate blocking agents that can be used are low molecular weight compounds containing acid hydrogen. Examples thereof are aliphatic or cycloaliphatic alcohols, dialkylamino alcohols, oximes, lactams, imides, hydroxyalkyl esters, malonic acid esters or acetic acid esters.

Aminoresins are also suitable as cross-linking agents. These resins are well known in the art and are supplied by many companies as sales products. Examples of such aminoresins include amine-formaldehyde condensation resins that are obtained by reaction of aldehydes with melamine, guanamine, benzoguanamine or dicyandiamide. The alcohol groups of the aldehyde condensation products are then etherified partially or completely with alcohols.

More particularly, cross-linking agents used are polyisocyanates having free isocyanate groups and polyisocyanates having at least partially blocked isocyanate groups, the latter optionally in combination with melamine resins.

The coating composition of this invention may contain additional hydroxy-functional binders apart from the hydroxy-functional (meth)acrylic copolymers I. For example, the additional hydroxy-functional binders may be hydroxy-functional binders well known to one skilled in the art, of the kind used for the formulation of solvent-based coating compositions. Examples of additional suitable hydroxy-functional binders include hydroxy-functional polyester, alkyd, polyurethane and/or poly(meth)acrylic resins that are different from the (meth)acrylic copolymers I. The additional hydroxy-functional binders may also be present in the modified form, e.g., in the form of (meth)acrylated polyesters or (meth)acrylated polyurethanes. They may be used on their own or in mixture. The proportion of additional hydroxy-functional binders may be 0 to 50 wt-%, for example, based on the amount of hydroxy-functional (meth)acrylic copolymers used according to the invention. The coating composition may also contain low molecular weight reactive components, so-called reactive thinners, which are capable of reacting with the cross-linking agent components in question. Examples of these include hydroxy- or amino-functional reactive thinners.

The hydroxy-functional (meth)acrylic copolymers and the corresponding cross-linking agents are used in the coating compositions according to the invention in such quantity proportions that the equivalent ratio of hydroxyl groups of the (meth)acrylic copolymers to the groups reactive towards hydroxyl groups of the cross-linking component is for example 5:1 to 1:5, preferably 3:1 to 1:3, in particular preferably 1.5:1 to 1:1.5. When additional hydroxy-functional binders and reactive thinners are used, their reactive functions are to be taken into account when the equivalent ratio is calculated.

The coating composition of this invention contains organic solvents (component III). The solvents may originate from the preparation of the binders or they may be added separately. They are organic solvents typical of those used for coatings and well known to those skilled in the art, for example, those already mentioned above for the preparation of solution polymers.

The coating composition of this invention may contain pigments and/or fillers. Suitable pigments include conventional color-imparting and/or special effect-imparting coating pigments of an organic or inorganic nature. Examples of inorganic and organic colored pigments are titanium dioxide, micronized titanium dioxide, iron oxide pigments, carbon black, azo pigments, phthalocyanine pigments, quinacridone or pyrrolopyrrole pigments. Examples of special-effect pigments that can be used are metal pigments, e.g., of aluminum or copper, interference pigments such as, e.g., titanium dioxide-coated aluminum, coated mica, graphite effect pigments and iron oxide flake. Examples of fillers are silica, barium sulfate, talc, aluminum silicate, and magnesium silicate.

Additives conventionally used in coatings may be used in the coating compositions of this invention. Examples of such additives include light protecting agents, e.g., based on benzotriazoles and HALS (hindered amine light stabilizer) compounds, leveling agents based on (meth)acrylic homopolymers or silicone oils, rheology-control agents such as fine-particle silica or polymeric urea compounds, thickeners such as partially cross-linked polycarboxylic acid or polyurethanes, anti-foaming agents, wetting agents, curing accelerators for the cross-linking reaction of the OH-functional binders, for example, organic metal salts such as dibutyltin dilaurate, zinc naphthenate and compounds containing tertiary amino groups such as triethylamine for the cross-linking reaction with polyisocyanates. The additives are used in conventional amounts known to a person skilled in the art.

Transparent or pigmented coating compositions may be prepared. In order to prepare transparent coating compositions, the individual constituents are mixed together in the usual manner and homogenized or dispersed thoroughly. In order to prepare pigmented coating compositions, the individual constituents are mixed together and homogenized or milled in the usual way. For example, the procedure may be such that initially, a part of the hydroxy-functional (meth)acrylic copolymers I and optionally, additional hydroxy-functional binders are mixed with the pigments and/or fillers and conventional coating additives and solvents and milled in milling or dispersing equipment. The remaining amount of binder to form the coating composition then is added.

Depending on the type of cross-linking agents, one-component or two-component coating compositions may be formulated according to the invention. If polyisocyanates having free isocyanate groups are used as cross-linking agents, the systems are two-component, i.e., the hydroxyl group-containing binder component, optionally, with pigments, fillers and conventional coating additives, and the polyisocyanate component may be mixed together only shortly before application. In principle, the coating compositions may be adjusted with organic solvents to spray viscosity before application.

The coating compositions of this invention may be applied by known methods, particularly by spraying. The coatings obtained may be cured at room temperature or by forced drying at higher temperatures up to 160°C, preferably, up to 80°C, and more preferably at 20°C to 60°C.

The coating compositions of this invention are suitable for automotive and industrial coating. In the automotive coating sector the coating composition may be used both for OEM automotive coating and for automotive and automotive part refinishing. Baking temperatures from 60°C to 140°C, for example, preferably from 110°C to 130°C, are used for OEM automotive coatings. Curing temperatures from 20°C to 80°C, for example, particularly from 40°C to 60°C are used for automotive refinishing.

The coating compositions according to the invention may be formulated, for example, as pigmented top coats or as transparent clear coats and used for the preparation of the outer pigmented top coat layer of a multi-layer coating or for the preparation of the outer clear coat of a multi-layer coating. Thus, the present invention also relates to the use of the coating compositions as a pigmented top coat coating composition and as a clear coat coating composition, and also relates to a process for the preparation of multi-layer coatings, particularly where the pigmented top coat and transparent clear coat layers of multi-layer coatings are produced by means of the coating compositions of this invention.

The coating compositions may be applied as a pigmented top coat layer, for example, to conventional one-component or two-component filler layers. However, the coating compositions according to the invention may also be applied and cured as a filler layer, for example, on conventional primers, such as, two-component epoxy primers or to electrocoated primers.

The coating compositions may be applied as transparent clear coat coating compositions, for example by the wet-in-wet method, to solvent-based or aqueous color- and/or special effect-imparting base coat layers. In this case, the color and/or special effect-imparting base coat layer is applied to an optionally pre-coated substrate before the clear coat coating layer of the clear coat coating compositions of this invention is applied. After an optional flash-off phase, both layers are cured together. Within the context of a standard automotive coating process, flash-off may be carried out, for example, at 20°C to 80°C and within the context of a refinishing process may be carried out over a period of 15 to 45 minutes at ambient temperature, depending on the relative humidity.

The curing temperatures depend on where the coating is to be applied and/or the binder/cross-linking agent system used.

The coating compositions of this invention may be used in a multi-layer coating to prepare top coat layers and clear coat layers with a balanced proportion between good mar resistance and hardening behavior and with a short drying period, particularly at low temperatures of, for example, 60°C and below and likewise at room temperature. Because of the rapid drying of the coating compositions according to the invention during cross-linking with polyisocanates at temperatures from room temperatures to 60°C, the coating compositions of this invention are also particularly suited for automotive refinishing. When the coating compositions of this invention are used as clear coats, within the context of a base coat/clear coat-two-layer coating, no dissolution or only very little partial dissolution of the base coat layer is detected, particularly in the case of a solvent-based base coat layer. The coating composition has excellent intermediate layer adhesion.

The present invention is described below in more detail by means of examples. All parts and percentages are on a weight basis unless otherwise indicated. Molecular weights were determined by gel permeation chromotography using a polystyrene standard.

### EXAMPLES

### Example 1 (Comparative Example)

### Hydroxyl functional acrylic formed with 10 % polypropyleneglycol (5) methacrylate monomer

12.5 parts of Solvesso® 100 aromatic solvent were added to a reactor fitted with an agitator, condenser, heating mantle, nitrogen inlet, thermocouple and two addition ports and the temperature of the solvent was raised to its reflux temperature (approximately 165°C) under nitrogen. This was followed by the addition of a premixed solution of 20.6 parts of styrene, 6.6 parts of methylmethacrylate, 7.02 parts of 2-hydroxyethylmethacrylate, 8 parts of hydroxypropylmethacrylate and 4.7 parts of polypropyleneglycol (5) methacrylate (trade name is Bisomer PPM5S, LaPorte) in 0.8 parts of Solvesso® 100 over 5 hours while the reaction mixture was held at its reflux temperature. Simultaneously, a premixed solution of 0.94 parts of di-tert-butyl peroxide (Trigonox® B, Akzo) in 0.6 parts of Solvesso ®100, was added. After completing the addition, Solvesso® 100 was added (0.8 parts) as rinsing solvent and reactor contents held at reflux for 30 minutes. A solvent mixture then was added to the reactor consisting of 10.75 parts of xylene, 22.65 parts of butylacetate and 4.84 g Solvesso ® 100 to dilute the resins solution. The resulting resin solution had a solids content of 47.7 % and a Gardner-Holdt viscosity of I. Mn and Mw amount to 3300 and 8700 respectively. The theoretical hydroxyl value was 144.

### Examples 2 to 4

### Hydroxyl functional acrylic copolymers were formed with 20%, 30% and 40 % polypropyleneglycol (5) methacrylate monomer

The procedure of Example 1 was followed using the following constituents to form the copolymers:

| | Ex. 2 | Ex. 3 | Ex. 4 |
|---|---|---|---|
| Part 1 | | | |
| Solvesso ® 100 | 12.5 | 12.5 | 12.5 |

| Part 2 | | | |
|---|---|---|---|
| Styrene | 20.6 | 17.39 | 14.1 |
| Methylmethacrylate | 3.75 | 3.75 | 3.75 |
| 2-Hydroxyethylmethacrylate | 7.02 | 7.02 | 7.02 |
| Hydroxypropylmethacrylate | 6.1 | 4.7 | 3.29 |
| | 9.4 | 14.1 | 18.8 |
| Polypropyleneglycolmethacrylate Solvesso® 100 | 0.8 | 0.8 | 0.8 |

| Part 3 | | | |
|---|---|---|---|
| Trigonox ® B (Akzo) | 1.3 | 1.3 | 1.3 |
| Solvesso ® 100 | 0.6 | 0.6 | 0.6 |

| Part 4 | | | |
|---|---|---|---|
| Solvesso ® 100 | 0.8 | 0.8 | 0.8 |

| Part 5 | | | |
|---|---|---|---|
| Xylene | 10.75 | 10.75 | 10.75 |
| Butylacetate | 22.65 | 22.65 | 22.65 |
| Solvesso ® 100 | 3.73 | 3.64 | 3.64 |

| Test results | | | |
|---|---|---|---|
| Solids | 47.6 | 47.1 | 47.3 |
| Viscosity | E | B+1/2 | A |
| Mn | 3,000 | 2,600 | 2400 |
| Mw | 9,800 | 9,700 | 8700 |
| OH value (theoretical) | 142 | 143 | 144 |

### EXAMPLE 5

### Hydroxyl functional acrylic copolymer made with 25 % polypropyleneglycol methacrylate (5) monomer

28 parts propylene glycol monomethyl ether acetate were added to a reactor fitted with an agitator, condenser, heating mantle, nitrogen inlet, thermocouple and two addition ports The temperature was raised to reflux temperature (approximately 146°C) under nitrogen. This was followed by the addition of a premixed solution of 7.86 parts of styrene, 7.86 parts of isobornylmethacrylate, 5.24 parts of ethylhexylmethacrylate and 8.15 parts of 2-hydroxyethylmethacrylate in 0.5 part of propylene glycol monomethyl ether acetate over 2 hours while holding the reaction mixture at it reflux temperature. Simultaneously, a premixed solution of di-tert-butyl peroxide (Trigonox ® B, Akzo, 0.18 parts) and tert-Butyl peroxy-2-ethylhexanoate (Trigonox ® 21S, Akzo, 0.72) in 3 parts of propylene glycol monomethyl ether acetate was added. During the second feed 8.73 parts of styrene, 2.32 parts of methylmethacrylate, 3.49 parts of 2-hydroxyethylmethacrylate and 14.55 parts of polypropyleneglycol (5) methacrylate in 0.5 part of propylene glycol monomethyl ether acetate were added over 2 hours. Simultaneously, a premixed solution of Di-tert-butyl peroxide (Trigonox ® B, Akzo, 0.18 parts) and tert-Butyl peroxy-2-ethylhexanoate (Trigonox ® 21S, Akzo, 0.72) in 3 parts of propylene glycol monomethyl ether acetate was added. Propylene glycol monomethyl ether acetate (0.5 part) was added as rinsing solvent and the reaction mixture was then held at reflux for 30 minutes. In a next step, a premixed solution of tert-butyl peroxy-2-ethylhexanoate (Trigonox® 21S, Akzo, 0.2 parts) in 3 parts of propylene glycol monomethyl ether acetate was added over 30 minutes. The reaction mixture was then held at its reflux temperature for 60 minutes and diluted with 1.3 parts of propylene glycol monomethyl ether acetate. The resulting resin solution had a solids content of 58.6 % and a Gardner-Holdt viscosity of X-1/3. Mn and Mw were 3300 and 8900 respectively. The theoretical hydroxyl value was 124.

### Example 6

### Hydroxyl functional acrylic with a polypropyleneglycol (5) methacrylate monomer and the same composition as the resin described in Example 5

To a reactor fitted with an agitator, condenser, heating mantle, nitrogen inlet, thermocouple and two addition ports 28 parts-propylene glycol monomethyl ether acetate was added. The temperature was raised to reflux (approximately 146°C) under nitrogen. This was followed by the addition of a premixed solution of 16.59 parts of styrene, 7.86 parts of isobornylmethacrylate, 5.24 parts of ethylhexylmethacrylate, 11.64 parts of 2-hydroxyethylmethacrylate, 2.32 parts of methylmethacrylate and 14.55 parts of polypropyleneglycol (5) methacrylate in 1 part of propylene glycol monomethyl ether acetate over 4 hours at reflux. Simultaneously, a premixed solution of di-tert.-butyl peroxide (Trigonox® B, Akzo, 0.36 parts) and tert.-butyl peroxy-2-ethylhexanoate (Trigonox 21S, Akzo, 1.44 parts) in 6 parts of propylene glycol monomethyl ether acetate was added. Propylene glycol monomethyl ether acetate (0.5 part) was added as rinsing solvent and the reaction mixture was then held at reflux for 30 minutes. In a next step a premixed solution of tert-Butyl peroxy-2-ethylhexanoate (Trigonox® 21S, Akzo, 0.2 parts) in 3 parts of propylene glycol monomethyl ether acetate was added over 30 minutes. The reaction mixture was then held at its reflux temperature for 60 minutes and diluted with 1.3 parts of propylene glycol monomethyl ether acetate. The resulting resin has a solids content of 57.1 % and a Gardner-Holdt viscosity of X-1/3. Mn and Mw was 3,700 and 12,300 respectively. The theoretical hydroxyl value amounts to 124.

### Examples 7-12

### Clear coat formulations based on the resins described in the Examples 1-6

A standard clear coating composition (STD), in which a hydroxyl functional acrylic without polypropylene glycol methacrylate was formulated with the ingredients shown in Table 1 (following). 6 modified coating compositions (7-12) were made in which the standard hydroxyl functional acrylic was replaced by the resins described in Examples 1-6. The amount of resin was adjusted to keep the binder solids (39.56%) constant for each coating composition.

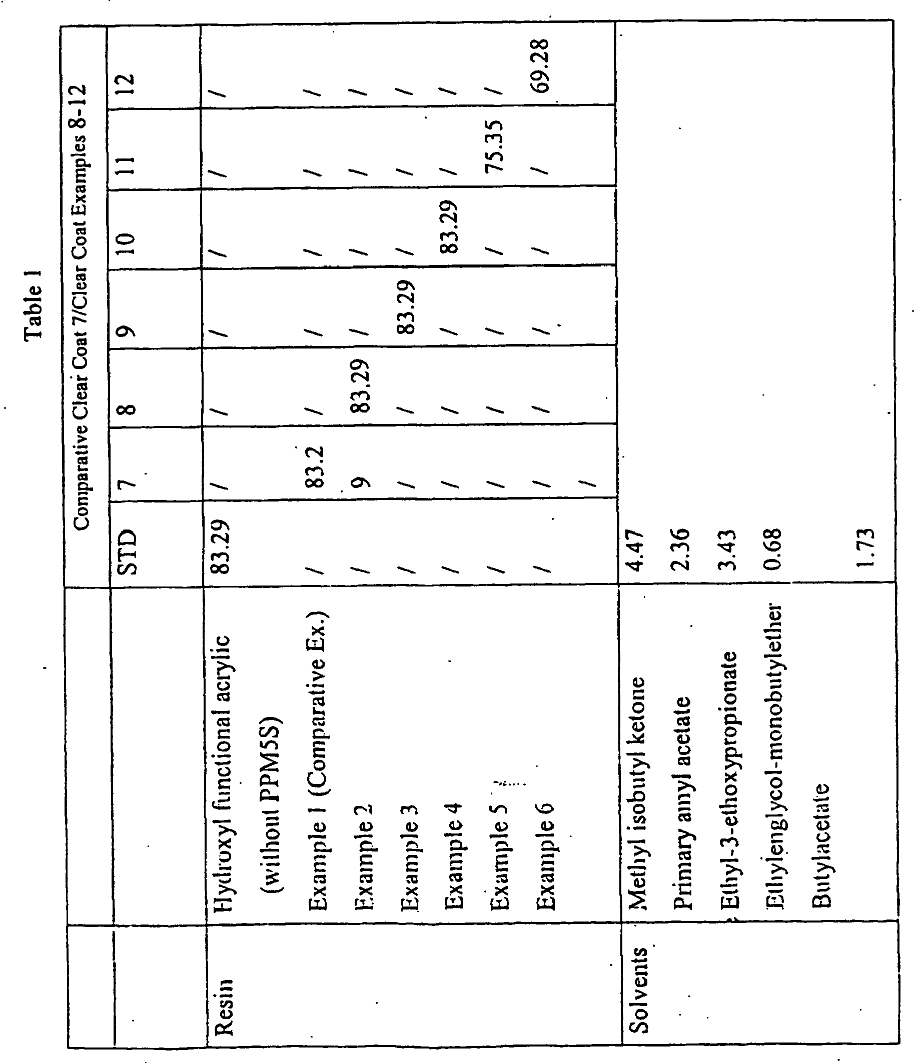

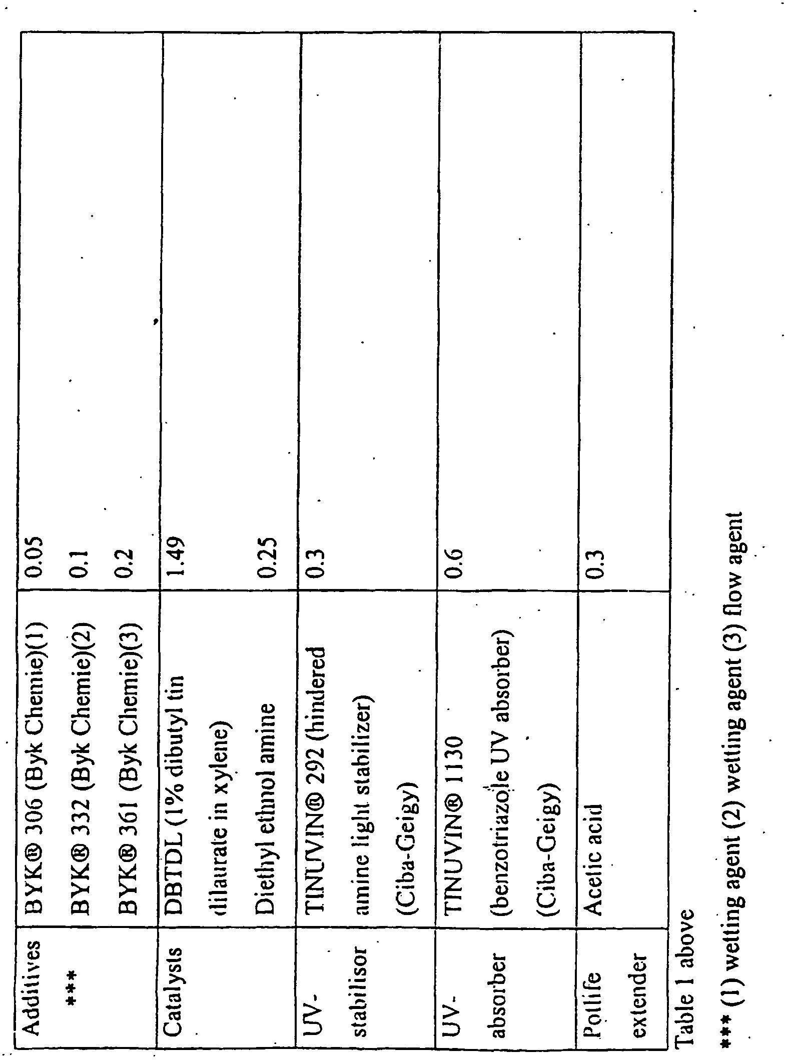

All of the above modified clear coating compositions 7-12 were activated with a commercial activator (polyisocyanate) based on Desmodur® 3390 (Bayer). The NCO / OH ratio was kept constant at 1.05. The clear coats were applied over a blue commercial basecoat and baked for 30 minutes at 60°C. Properties of these clear coat compositions are tabulated below in Table 2.

**Table 2**

| Tests | | Comparative Example 7 /Examples 8-12 | | | | | | |
|---|---|---|---|---|---|---|---|---|
| | | STD | 7 | 8 | 9 | 10 | 11 | 12 |
| Persoz hardness [s] | Initial | 61 | 58 | 51 | 44 | 36 | 138 | 157 |
| | Final | 276 | 237 | 216 | 204 | 150 | 288 | 300 |
| Fisher hardness [Knoop] | Initial | 0.41 | 0.61 | 0.44 | 0.31 | 0.21 | 4.3 | 5 |
| | Final | 14.9 | 11.8 | 11.0 | 9.4 | 6.2 | 13.2 | 13.7 |
| Drying (initial) | | VP-P | P-F | F | G | G | G | G |
| Scratch resistance [residual gloss] | | 44.1 | 42.7 | 55.5 | 53 | 66.5 | 63.9 | 60.5 |

### Test methods used:

### Drying:

Standard metal panels (10x30 cm) are clear coated (50µ) and baked horizontally for 30 minutes at 60°C. After a 10 minutes cooldown period, a strip of masking tape is applied across the panel, smoothing it out manually using moderate firm pressure to insure uniform contact. A 2 kg weight is rolled over the tape to and fro. After 10 minutes the tape is removed and the degree of marking is observed. After 30 minutes recovery the tape imprint is evaluated again. Ratings vary from VVP (very, very poor), VP (very poor), P (poor), F (fair), G (good) up to VG (very good).

### Scratch Resistance:

The clear coated panels are scratched after 7 days aging using the linear Gardner brush test (nylon brush) (according to ASTM D2486-89) though using an abrasive medium based on calcium carbonate. Each panel undergoes 30 brush cycles. The gloss before and after scratching is measured (Dr. Lange gloss measurer).

The clear coats according to the invention (Compositions 8-12) showed a substantially better balance between good drying properties and excellent scratch resistance as well as an acceptable hardening behaviour, compared to the clear coat of the prior art (STD-standard clear coat and Comparative Example 7).

## Claims

1. A solvent-based coating composition comprising
(I) 20 to 80 wt-% of at least one hydroxy-functional (meth)acrylic copolymer I having an OH-value from 40 to 260 mg KOH/g and a number average molecular mass Mn from 1,300 to 20,000 g/mol
(II) 5 to 40 wt-% of at least one cross-linking agent II which is reactive with hydroxyl groups,
(III) 10 to 50 wt-% of organic solvents,
whereby the wt-% are based on the weight of the coating composition and wherein the at least one hydroxy-functional (meth)acrylic copolymer I consists of the following polymerized components:
A. 20 to 40 wt-% of at least one polyalkyleneglycol (meth)acrylate,
B. 10 to 50 wt-% of at least one vinylaromatic olefinically unsaturated monomer capable of radical polymerization,
C. 15 to 40 wt-% of at least one hydroxyalkyl ester of (meth)acrylic acid, at least one reaction product of alpha,beta-unsaturated monocarboxylic acids with glycidyl esters of saturated monocarboxylic acids branched in the alpha position and/or at least one reaction product of hydroxyalkyl (meth)acrylates with lactones,
D. 5 to 50 wt-% of at least one (meth)acrylic acid ester of an aliphatic and/or cycloaliphatic alcohol having 1 to 10 carbon-atoms in the (cyclo)alkyl residue,
whereby the sum of the proportions of components A to D totals 100 wt-%.

2. The coating composition of claim 1 comprising at least one hydroxy functional (meth)acrylic copolymer I having an OH-value from 80-200mg KOH/g and a number average molecular mass (Mn) from 1,500 to 15,000 g/mol.

3. The coating composition according to claim 1 additionally comprising at least one hydroxy-functional (meth)acrylic copolymer having an OH-value from 40 to 260 mg KOH/g and a number average molecular mass (Mn) from 1,300 to 20,000 g/mol, which contains one or more polymerized polyalkyleneglycol (meth)acrylates in such quantities that 20-40 wt-% polyalkyleneglycol (meth)acrylate, based on the total amount of (meth)acrylic copolymers, are contained in the coating composition.

4. The coating composition of claim 1 comprising at least one polyisocyanate having free isocyanate groups.

5. The coating composition of claim 1 comprising at least one aminoresin having groups that are reactive with the hydroxy groups of the copolymer I.

6. The coating composition of claim 1 comprising at least one cross-linking agent selected from a group consisting of at least partially blocked polyisocyanates, and a mixture of at least partially blocked polyisocyanates and aminoresins.

7. Use of the coating composition according to one of claims 1 to 6 in a process for multilayer coating of substrates.

8. Use of the coating composition according to claim 7 as a clear coat or as pigmented topcoat.

9. Use of the coating composition according to one of claims 1 to 6 for automotive or automotive part coating.

## Patentansprüche

1. Beschichtungszusammensetzung auf Lösemittelbasis, aufweisend:
(I) 20% bis 80 Gew.% mindestens eines Hydroxy-funktionellen (Meth)acryl-Copolymers I mit einer OH-Zahl von 40 bis 260 mgKOH/g und einer zahlengemittelten relativen Molekülmasse Mn von 1.300 bis 20.000 g/Mol,
(II) 5% bis 40 Gew.% mindestens eines vernetzenden Mittels II, das mit den Hydroxyl-Gruppen reaktionsfähig ist,
(III) 10% bis 50 Gew.% organische Lösemittel,
wobei die Angaben auf das Gewicht der Beschichtungszusammensetzung bezogen sind und wobei das mindestens eine Hydroxy-funktionelle (Meth)acryl-Copolymer I aus den folgenden polymerisierten Komponenten besteht:
A. 20% bis 40 Gew.% mindestens eines Polyalkylenglykol(meth)acrylats,
B. 10% bis 50 Gew.% mindestens eines vinylaromatischen, olefinisch ungesättigten Monomers, das zu einer radikalischen Polymerisation in der Lage ist,
C. 5% bis 40 Gew.% mindestens eines Hydroxyalkylesters der (Meth)acrylsäure, mindestens ein Reaktionsprodukt von α,β-ungesättigten Monocarbonsäuren mit Glycidylestern von gesättigten Monocarbonsäuren, die in der α-Stellung verzweigt sind, und/oder mindestens ein Reaktionsprodukt von Hydroxyalkyl(meth)acrylaten mit Lactonen,
D. 5% bis 50 Gew.% mindestens eines (Meth)acrylsäureesters eines aliphatischen und/oder cycloaliphatischen Alkohols mit 1 bis 10 Kohlenstoffatomen in dem (Cyclo)alkyl-Rest,
wobei die Summe der Anteile der Komponenten A bis D 100 Gew.% beträgt.

2. Beschichtungszusammensetzung nach Anspruch 1, aufweisend mindestens ein Hydroxy-funktionelles (Meth)acryl-Copolymer I mit einer OH-Zahl von 80 bis 200 mgKOH/g und einer zahlengemittelten relativen Molekülmasse (Mn) von 1.500 bis 15.000 g/Mol.

3. Beschichtungszusammensetzung nach Anspruch 1, zusätzlich aufweisend mindestens ein Hydroxy-funktionelles (Meth)acryl-Copolymer mit einer OH-Zahl von 40 bis 260 mgKOH/g und einer zahlengemittelten relativen Molekülmasse (Mn) von 1.300 bis 20.000 g/Mol, das ein oder mehrere polymerisierte Polyalkylenglykol(meth)acrylate in solchen Mengen enthält, das bezogen auf die Gesamtmenge an (Meth)acryl-Copolymeren 20% bis 40 Gew.% Polyalkylenglykol(meth)acrylat in der Beschichtungszusammensetzung enthalten sind.

4. Beschichtungszusammensetzung nach Anspruch 1, aufweisend mindestens ein Polyisocyanat mit freien Isocyanat-Gruppen.

5. Beschichtungszusammensetzung nach Anspruch 1, aufweisend mindestens ein Aminoharz, das über Gruppen verfügt, die mit den Hydroxy-Gruppen des Copolymers I reaktionsfähig sind.

6. Beschichtungszusammensetzung nach Anspruch 1, aufweisend mindestens ein vernetzendes Mittel, das ausgewählt ist aus der Gruppe, bestehend aus mindestens teilgeblockten Polyisocyanaten und einer Mischung von mindestens teilgeblockten Polyisocyanaten und Aminoharzen.

7. Verwendung der Beschichtungszusammensetzung nach einem der Ansprüche 1 bis 6 in einem Verfahren zum mehrlagigen Beschichten von Substraten.

8. Verwendung der Beschichtungszusammensetzung nach Anspruch 7 als ein Klarlack oder ein pigmentierter Decklack.

9. Verwendung der Beschichtungszusammensetzung nach einem der Ansprüche 1 bis 6 für Autolack oder zum Lackieren von Autoteilen.

## Revendications

1. Composition de revêtement à base de solvant, comprenant:
(I) de 20 à 80% en poids d'au moins un copolymère (méth)acrylique à fonction hydroxyle I présentant une valeur de OH de 40 à 260 mg de KOH/g et un poids moléculaire moyen en nombre Mn de 1.300 à 20.000 g/mol,
(II) de 5 à 40% en poids d'au moins un agent de réticulation II qui est réactif avec des groupes hydroxyles,
(III) de 10 à 50% en poids de solvants organiques,
par quoi les % en poids sont basés sur le poids de la composition de revêtement et dans laquelle le au moins un copolymère (méth)acrylique à fonction hydroxyle I est constitué des composants polymérisés suivants:
A. de 20 à 40% en poids d'au moins un (méth)acrylate de polyalkylèneglycol,
B. de 10 à 50% en poids d'au moins un monomère oléfiniquement insaturé vinylaromatique capable d'une polymérisation radicalaire,
C. de 15 à 40% en poids d'au moins un hydroxyalkylester d'acide (méth)acrylique, d'au moins un produit de réaction d'acides monocarboxyliques alpha,bêta-insaturés avec des glycidylesters d'acides monocarboxyliques saturés ramifiés dans la position alpha et/ou d'au moins un produit de réaction d'hydroxyalkyl(méth)acrylates avec des lactones,
D. de 5 à 50% en poids d'au moins un ester d'acide (méth)acrylique d'un alcool aliphatique et/ou cycloaliphatique possédant de 1 à 10 atomes de carbone dans le résidu (cyclo)alkyle,
par quoi la somme des proportions des composants A à D est égale à 100% en poids.

2. Composition de revêtement suivant la revendication 1, comprenant au moins un copolymère (méth)acrylique à fonction hydroxyle I présentant une valeur de OH de 80-200 mg de KOH/g et un poids moléculaire moyen en nombre (Mn) de 1.500 à 15.000 g/mol.

3. Composition de revêtement suivant la revendication 1, comprenant en outre au moins un copolymère (méth)acrylique à fonction hydroxyle présentant une valeur de OH de 40 à 260 mg de KOH/g et un poids moléculaire moyen en nombre (Mn) de 1.300 à 20.000 g/mol, qui contient un ou plusieurs (méth)acrylates de polyalkylèneglycol polymérisés dans des quantités telles que 20-40% en poids de (méth)acrylate de polyalkylèneglycol, sur la base de la quantité totale de copolymères (méth)acryliques, sont contenus dans la composition de revêtement.

4. Composition de revêtement suivant la revendication 1, comprenant au moins un polyisocyanate possédant des groupes isocyanates libres.

5. Composition de revêtement suivant la revendication 1, comprenant au moins une résine amino possédant des groupes qui sont réactifs avec les groupes hydroxyles du copolymère I.

6. Composition de revêtement suivant la revendication 1, comprenant au moins un agent de réticulation choisi dans le groupe constitué de polyisocyanates au moins partiellement bloqués et d'un mélange de polyisocyanates au moins partiellement bloqués et de résines amino.

7. Utilisation de la composition de revêtement suivant l'une quelconque des revendications 1 à 6 dans un procédé pour un revêtement multicouche de substrats.

8. Utilisation de la composition de revêtement suivant la revendication 7 comme une couche claire ou comme une couche du dessus pigmentée.

9. Utilisation de la composition de revêtement suivant l'une quelconque des revendications 1 à 6 pour un revêtement d'automobiles ou de pièces d'automobiles.
